# EUROPEAN PATENT APPLICATION

(11) **EP 1 512 568 A1**
(43) Date of publication of application: **09.03.2005**
(21) Application number: 04255289.3
(22) Date of filing: 01.09.2004
(51) Int. Cl.: B60J 7/06

(54) **Improvements in and relating to a covering system**

(30) Priority: 04.09.2003 GB 0320658
(71) Applicant: Trio Design & Engineering Limited, Beaconsfield, Buckinghamshire HP9 1QL (GB)
(72) Inventor: Storey, Colin, Gloucester GL2 6DA (GB)
(74) Representative: Moffat, John Andrew

(57) **Abstract**

The present invention relates to a covering system for open-topped vehicles or for open-topped containers mounted on a vehicle. When open-topped vehicles or containers are fully loaded the side of the vehicle or container may bow or bulge, and in some cases can prevent proper deployment of the covering system. However, to be roadworthy open-topped vehicles or vehicles bearing an open-topped container on a load bed must not exceed a certain width. A mechanism is disclosed comprising a flexible cover 24 adapted to be deployed from and retracted into a dispensing means 22, the flexible cover 24 having a leading edge attached to a transversely extending bar 26, first and second arms 20 coupled to first and second ends of the bar 26, in which the first and second arms 20 are adapted to move along sides of the vehicle 2 and each of the first and second arms 20 are actuated to rotate about a respective vertical axis away from the sides of the vehicle 2. It is an advantage of the invention that it provides an improved system for deployment of a flexible cover 24 that overcomes the problems noted.

## Description

The present invention relates to a covering system for open-topped vehicles or for open-topped containers mounted on a vehicle. In particular, the invention relates to a system for deploying a flexible cover over the vehicle or container as the case may be.

It is known to provide a covering system in which a flexible cover is drawn out from a dispenser by a horizontal bar located within a free end of the cover. It is known to move the bar by connecting the bar to a pair of swinging arms secured to a mid point of a load bed of the vehicle. When open-topped vehicles or containers are fully loaded the side of the vehicle or container may bow or bulge. In such a case, the bow or bulge may obstruct the free movement of the swinging arms, and in some cases prevent proper deployment of the covering system.

It is also a requirement that to be roadworthy open-topped vehicles or vehicles bearing an open-topped container on a load bed must not exceed a certain width. Accordingly a covering system for such vehicles must not add to the width of such vehicles if they are to be used on public roads.

It is an advantage of the invention that it provides an improved system for deployment of a flexible cover that overcomes these problems.

According to a first aspect of the present invention a mechanism for deploying a flexible cover over an upper surface of an open-topped vehicle or an open-topped container situated on a vehicle is characterised in that it comprises a flexible cover adapted to be deployed from and retracted into a dispensing means, the flexible cover having a leading edge attached to a transversely extending bar, first and second arms coupled to first and second ends of the bar, in which the first and second arms are adapted to move along sides of the vehicle and each of the first and second arms are actuated to rotate about a respective vertical axis away from the sides of the vehicle.

Preferably each of the first and second arms is independently actuated to rotate about the respective vertical axis.

Preferably the mechanism further comprises first and second guide rails for location to each side of the vehicle and first and second drive means adapted for movement within the respective guide rails for moving each of the first and second arms along the sides of the vehicle and to rotate each of the first and second arms about the respective vertical axis.

More preferably first and second lower linkages are provided between the respective drive means and the first or second arm to rotate the first or second arm about the respective vertical axis and first and second upper linkages are provided between the respective arms and the first and second ends of the transversely extending bar. More preferably, the upper linkages are L-shaped.

Preferably a height of the dispensing means with respect to the vehicle is adjustable and the first and second arms are each adjustable in length.

According to a second aspect of the invention an open-topped vehicle or vehicle to which an open-topped container is to be mounted incorporates a mechanism for deploying a flexible cover in accordance with the first aspect of the invention.

The invention will now be described, by way of example only, with reference to the accompanying drawings, in which:-
Figure 1 shows a somewhat schematic perspective view of a vehicle fitted with a mechanism in accordance with the present invention, the mechanism being shown in a first position;
Figure 2 shows a view similar to Figure 1, in which the mechanism is in a second position;
Figure 3 shows a view similar to Figure 2, in which an open-topped container is shown in position on the vehicle;
Figure 4 shows a view similar to that of Figure 3 with a cover in a partially deployed position;
Figure 5 shows a view similar to that of Figure 4 with the cover in a half deployed position;
Figure 6 shows a view similar to that of Figure 5 illustrating an arm in a position away from a first position;
Figure 7 shows a view similar to that of Figure 4 with the cover in a fully deployed position; and
Figure 8 shows a view similar to Figure 7 with the mechanism in a fully deployed position.

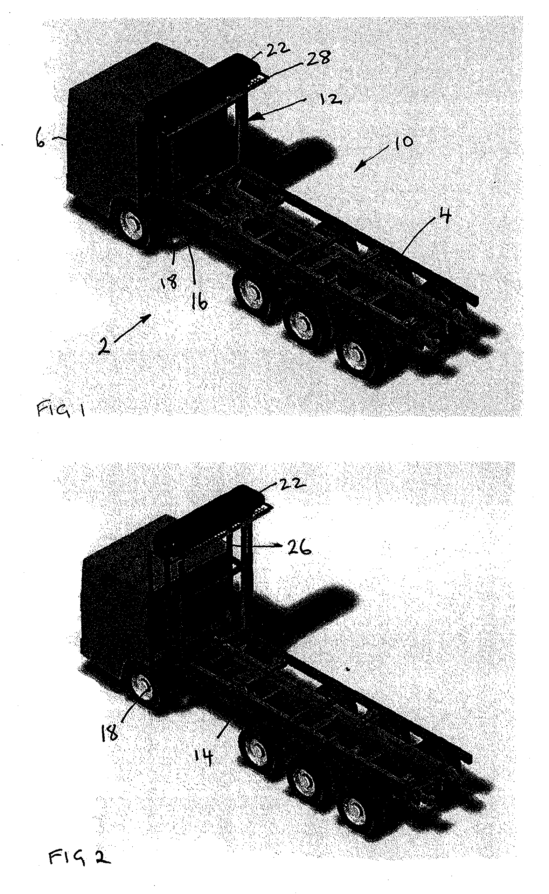

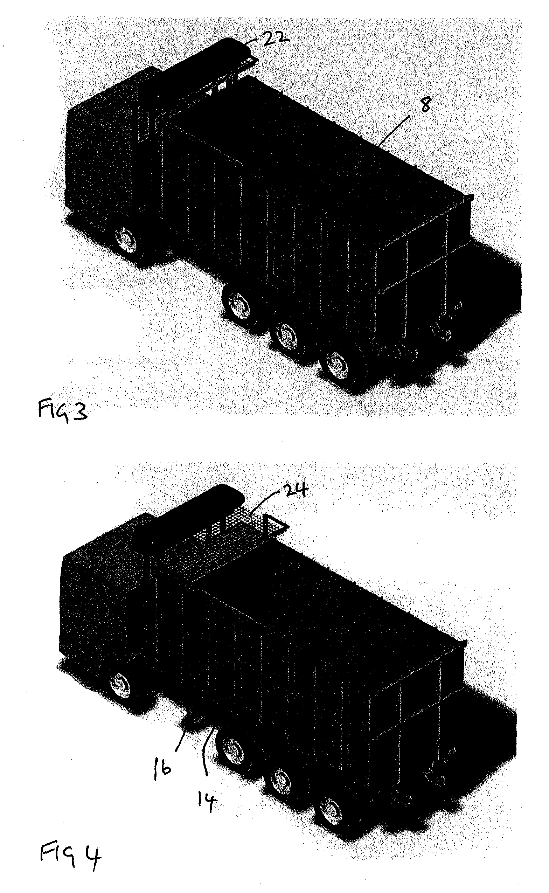

Referring first to Figure 1, there may be seen a vehicle 2 having a chassis 4 and a driver's compartment 6 to the front of the chassis 4. A container 8 has been omitted from Figures 1 and 2 for reasons of clarity. A mechanism 10 for deploying a flexible cover over an upper surface of an open-topped vehicle or an open-topped container situated on a vehicle is fitted to the chassis 4.

The mechanism comprises a number of elements. A lifting mechanism 12 is provided transverse of the chassis 4 adjacent a rear of the driver's compartment 6. First and second guide rails 14 are mounted to the chassis 4 extending longitudinally along a length of the chassis 4 to the rear of the driver's compartment 6. Each outer face of the first and second guide rails 14 defines a generally C-shaped channel

First and second carriages 16 are each retained within the C-shaped channel in a respective guide rail 14 and adapted to be driven along the length of each guide rail 14. The carriages 16 may be driven by any suitable means under the control of an operator.

First and second lower linkages 18 are each pivotally coupled at a first end to each carriage 16. Each of the lower linkages 18 is adapted to be driven with respect to a respective carriage 16. Driving of each of the lower linkages 18 may be achieved by any suitable means.

First and second telescopic arms 20 are mounted at a respective lower end to a second end of respective first and second lower linkages 18. Each of the telescopic arms 20 is disposed about a vertical axis.

The lifting mechanism 10 may comprise any apparatus suitable for the task, for example hydraulic or pneumatic means operable remotely such as from within the driver's compartment 6 of the vehicle 2.

Above the lifting mechanism 10 is located a dispensing means 22. A flexible cover 24 is adapted to be deployed from and retracted into the dispensing means 22. The flexible cover 24 may include, but is not limited to, a flexible netting or tarpaulin. The flexible cover 24 has a forward edge attached by any suitable means to a transversely extending bar 26. First and second ends of the transverse bar 26 are pivotally connected to a first end of respective first and second upper linkages 28. Second ends of the upper linkages 28 are pivotally connected to upper ends of the first and second telescopic arms 20. In the illustrated embodiment, each of the upper linkages 28 is generally L-shaped.

When the lifting mechanism 10 is raised (Figure 2) to raise the height of the dispensing means 22 with respect to the vehicle chassis, the telescopic arms 20 extend to maintain the transverse bar 26 in line with the dispensing means. The telescopic arms may comprise piston and cylinder assemblies adapted to be driven in tandem with the lifting mechanism 12.

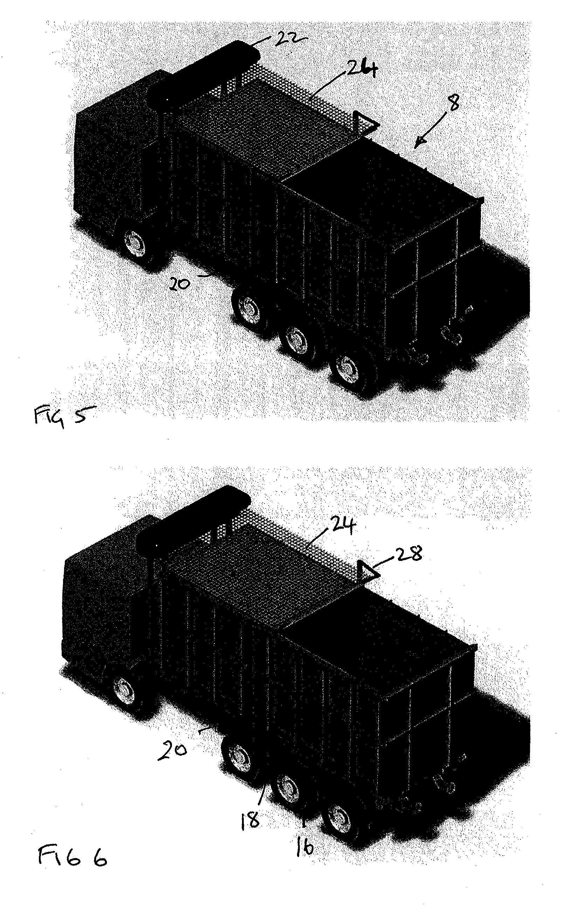

Figure 3 shows an open-topped container 8 in position on the vehicle 2. It will be understood that this container 8 may be permanently or removeably attached to the vehicle 2. As can be seen from Figure 3, to deploy the flexible cover 24 over the container, the transverse bar 26 is raised to a level above that of an upper edge of the container 8.

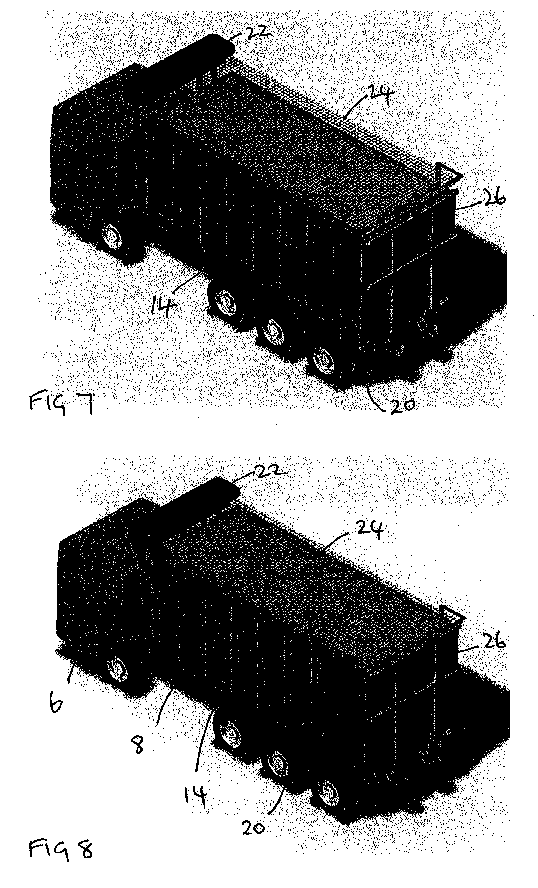

To deploy the flexible cover 24, each of the first and second carriages 16 are the driven in tandem along respective guide rails 14 (Figure 4). The lower linkages 18 are locked in position in relation to the telescopic arms 20. In this way the flexible cover 24 may be drawn out to cover the container 8 with the arms 20 being moved parallel to the sides of the container 8.

However, where the container 8 bows or bulges, it is necessary to move the arms 20 to a position away from the sides of the container 8. This is achieved by rotating the arms away from the sides of the container 8. In the illustrated embodiment, the lower linkage(s) 18 are driven with respect to the carriage(s) 16 to drive the arm(s) 20 away from the sides of the container (Figure 6) before continuing deployment of the flexible cover 24. One, or both, of the arms 20 may be adapted to be driven as required.

Once the bow or bulge has been passed, the lower linkage(s) 18 are driven to return the arm(s) 20 to their position adjacent the container 8. The carriages 16 are then driven to the rear of the vehicle 2 to draw the flexible cover 24 completely over the container 8 (Figure 7).

It will be seen that both before and after deployment of the cover, the telescopic arms 20 are located within a general width of the vehicle 2. As may be seen from Figure 1 in the initial position prior to deployment of the flexible cover 24, the arm(s) are in line with the sides of the driver's compartment 6 of the vehicle 2.

Once the flexible cover 24 covers the container 8, the lifting mechanism is actuated to lower the flexible cover 24 onto the upper edge 30 of the container 8 (Figure 8). In this way, the contents of the container 8 are retained within the container 8 during transport.

To retract the cover, the sequence of operations is performed in reverse order.

Instead of moving outward only when a bow or bulge is formed in the container 8, the arms 20 may be adapted to be rotated outward at the start of deployment, maintained in this position as the carriages 16 progress to an end of the vehicle 2 and are then retracted when the cover 24 is fully extended over the container 8.

## Claims

1. A mechanism for deploying a flexible cover (24) over an upper surface of an open-topped vehicle or an open-topped container situated on a vehicle **characterised in that** it comprises a flexible cover (24) adapted to be deployed from and retracted into a dispensing means (22), the flexible cover (24) having a leading edge attached to a transversely extending bar (26), first and second arms (20) coupled to first and second ends of the bar (26), in which the first and second arms (20) are adapted to move along sides of the vehicle (2) and each of the first and second arms (20) are actuated to rotate about a respective vertical axis away from the sides of the vehicle (2).

2. A mechanism according to claim 1, **characterised in that** each of the first and second arms (20) is independently actuated to rotate about the respective vertical axis.

3. A mechanism according to claim 1 or claim 2, **characterised in that** the mechanism further comprises first and second guide rails (14) for location to each side of the vehicle (2) and first and second drive means adapted for movement within the respective guide rails (14) for moving each of the first and second arms (20) along the sides of the vehicle (2) and to rotate each of the first and second arms (20) about the respective vertical axis.

4. A mechanism according to claim 3, **characterised in that** first and second lower linkages (18) are provided between the respective drive means and the first or second arm (20) to rotate the first or second arm (20) about the respective vertical axis and first and second upper linkages (28) are provided between the respective arms (20) and the first and second ends of the transversely extending bar (26).

5. A mechanism according to claim 4, **characterised in that** the upper linkages (28) are L-shaped.

6. A mechanism according to any previous claim, **characterised in that** a height of the dispensing means (22) with respect to the vehicle (2) is adjustable and the first and second arms (20) are each adjustable in length.

7. An open-topped vehicle or vehicle to which an open-topped container is to be mounted incorporating a mechanism for deploying a flexible cover (24) in accordance with any previous claim.
